(19) Europäisches Patentamt
European Patent Office
Office européen des brevets

(11) **EP 1 871 003 A1**

(12) **EUROPEAN PATENT APPLICATION**
published in accordance with Art. 153(4) EPC

(43) Date of publication:
**26.12.2007 Bulletin 2007/52**

(51) Int Cl.:
*H02P 27/06* (2006.01)

(21) Application number: **06834464.7**

(22) Date of filing: **12.12.2006**

(86) International application number:
**PCT/JP2006/324709**

(87) International publication number:
**WO 2007/108185 (27.09.2007 Gazette 2007/39)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.03.2006 JP 2006070166**

(71) Applicant: **Mitsubishi Electric Corporation**
**Chiyoda-ku**
**Tokyo 100-8310 (JP)**

(72) Inventors:
• **SHINOMOTO, Yosuke**
**c/o Mitsubishi Electric Corporation**
**Chiyoda-ku, Tokyo 100-8310 (JP)**

• **ARISAWA, Koichi**
**c/o Mitsubishi Electric Corporation**
**Chiyoda-ku, Tokyo 100-8310 (JP)**
• **SAKANOBE, Kazunori**
**c/o Mitsubishi Electric Corporation**
**Chiyoda-ku, Tokyo 100-8310 (JP)**
• **YAMADA, Michio**
**c/o Mitsubishi Electric Corporation**
**Chiyoda-ku, Tokyo 100-8310 (JP)**

(74) Representative: **Pfenning, Meinig & Partner GbR**
**Theresienhöhe 13**
**D-80339 München (DE)**

(54) **MOTOR DRIVE AND COMPRESSOR DRIVE**

(57) To obtain an electric motor driving device and a compressor driving device which are small, lightweight, and cost-effective by providing a capacitor for smoothing a rectified direct-current voltage of an alternating-current power supply whose capacity is reduced to be small, or by not providing the capacitor, and in which an influence due to a direct current voltage pulsation on a direct current load other than the electric motor is reduced. The devices include first rectifying means to which an alternating-current power supply is input, and which rectifies the alternating-current voltage to a direct-current voltage, power conversion means which converts the direct-current voltage rectified by the first rectifying means into an alternating-current voltage and supplies the voltage to an electric motor, second rectifying means to which the alternating-current power supply is input, and which rectifies the alternating-current voltage into a direct-current voltage, and a smoothing capacitor which is provided at a direct current output side of the second rectifying means and which smoothes the rectified direct-current voltage and supplies the voltage to a direct current load.

FIG. 1

EP 1 871 003 A1

**Description**

Technical Field

The present invention relates to an electric motor driving device and a compressor driving device, and more particularly, relates to a method of reducing a capacity of a capacitor for smoothing a direct current voltage to be small.

Background Art

In conventional electric motor driving devices and compressor driving devices, for example, a device configured that "...a voltage command value is made, a PWM signal of a pulse width corresponding to the voltage command value is outputted, and when an inverter output voltage becomes a saturated state so that the inverter output voltage equivalent to the voltage command value cannot be obtained during the increase control of the pulse width of the PWM signal, the outputting timing of the PWM signal is quickened to put the phase of the inverter output voltage forward." has been proposed (for example, see patent document 1).

Further, for example, a device configured that "By means of a single-phase diode full wave rectifying circuit which receives the input of a single-phase AC power source, a small- capacity smoothing capacitor about one hundredth the smoothing capacitor for a conventional diode full wave rectifying circuit, connected to this, and a control circuit composed of a PWM inverter circuit for control and a motor, the torque of the motor is controlled in advance with a frequency double the power source, the input power factor of the diode full wave rectifying circuit and the waveform are improved." has been proposed (for example, see patent document 2).

Further, for example, a device configured that "A control circuit (20, 66, 112) for driving an inverter section detects a pulsating voltage (Er, Erd) by means of pulsating voltage detecting means (24, 68, 114), and an output (Vi) of a reference wave or a reference vector pattern is compensated by a pulsating voltage detected value (Er, Erd) whereby a PWM output waveform compensated for a D.C. pulsating voltage is outputted." has been proposed (for example, see patent document 3).

Further, for example, a device configured that "A device is provided with a rectifying circuit which receives an input of an AC power source and has a diode bridge and a small-capacity reactor to be connected to an AC input side or a DC output side, an inverter which converts the DC power output of the rectifying circuit into an AC power, and a very small capacity DC link capacitor disposed between DC bus bars of the inverter, and between a primary capacitor of a switching control power supply portion and the DC bus bars of the inverter, a unidirectional rectifying means is provided." has been proposed (for example, see patent document 4).

Patent document 1: Japanese Unexamined Patent Application Publication No. 10-150795 (Abstract, Fig. 1)
Patent document 2: Japanese Unexamined Patent Application Publication No. 2002-51589 (Claim 1)
Patent document 3: Japanese Unexamined Patent Application Publication No. 6-153534 (Abstract, Fig. 2)
Patent document 4: Japanese Unexamined Patent Application Publication No. 2005-253282 (Claim 1, Fig. 1)

Disclosure of Invention

Problems to be Solved by the Invention

In the conventional electric motor driving devices and compressor driving devices, in order to provide small, lightweight, and cost-effective devices, it has been proposed that in a device, a capacitor for smoothing a rectified direct-current voltage of an alternating-current power supply is eliminated or its capacity is reduced to be small, and further, a direct current voltage pulsation due to the small-capacity capacitor is controlled to be reduced, or a harmonic current is efficiently suppressed.

However, when these electric motor driving devices are applied to a system of an air conditioner, or the like, in addition to the electric motor driving device used for the compressor of the air conditioner, there are various fan motors which are largely affected by the oscillation due to the voltage pulsation or actuators which are driven by the direct-current voltage. Such actuators or the like are affected by the direct current voltage pulsation with the small-capacity capacitor, and may produce oscillation, noise, or improper operation.

The present invention has been made to solve the above-described problems. An object of the present invention is to obtain an electric motor driving device and a compressor driving device which are small, lightweight, and cost-effective by providing a capacitor for smoothing a rectified direct-current voltage of an alternating-current power supply whose capacity is reduced to be small, or by not providing the capacitor, and an influence due to a direct current voltage pulsation on a direct current load other than the electric motor is reduced.

Another object of the present invention is to obtain an electric motor driving device and a compressor driving device reduced in oscillation of an electric motor generated due to a capacitor for smoothing a rectified direct-current voltage of an alternating-current power supply whose capacity is reduced to be small, or due to not providing the capacitor.

Means for Solving the Problems

An electric motor driving device according to the present invention includes first rectifying means to which an alternating-current power supply is inputted, and which rectifies the alternating-current voltage to a direct-current voltage, power conversion means which converts the direct-current voltage rectified by the first rectifying means into an alternating-current voltage and supplies the voltage to an electric motor, second rectifying means to which the alternating-current power supply is inputted, and which rectifies the alternating-current voltage into a direct-current voltage, and a smoothing capacitor which is provided at a direct current output side of the second rectifying means to smooth the rectified direct-current voltage and supply the voltage to a direct current load. Advantages

The electric motor driving device according to the present invention includes the second rectifying means for rectifying the alternating-current voltage into the direct-current voltage, and the smoothing capacitor which is provided at the direct current output side of the second rectifying means to smooth the rectified direct-current voltage and supply the voltage to the direct current load. Then, even if a pulsation of the direct-current voltage to be inputted into the power conversion means for supplying the alternating-current voltage to the electric motor is generated, influence of the direct-current voltage pulsation on the direct current load other than the electric motor can be reduced.

Brief Description of the Drawings

Fig. 1 is a view illustrating a configuration of an electric motor driving device according to a first embodiment of the present invention.
Fig. 2 is a control block diagram of an inverter control section according to the first embodiment of the present invention.
Figs. 3 are views illustrating relationships between capacities of a smoothing capacitor and rectified voltage waveforms.
Figs. 4 are views illustrating current waveforms of electric motor currents at output torque pulsations.
Fig. 5 is a circuit block diagram for explaining a virtual current source according to the first embodiment of the present invention.
Figs. 6 are views illustrating current waveforms for explaining superposition of harmonic current components.
Fig. 7 is a view illustrating a structure of an air conditioner according to the first embodiment of the present invention.
Fig. 8 is a view illustrating a configuration of an electric motor driving device according to a second embodiment of the present invention.
Figs. 9 are views illustrating current waveforms for explaining control of harmonic currents according to the second embodiment of the present invention.
Fig. 10 is a view illustrating a configuration of an electric motor driving device according to a third embodiment of the present invention.
Fig. 11 is a view illustrating a configuration of an electric motor driving device according to a fourth embodiment of the present invention:
Fig. 12 is a view illustrating a configuration of an electric motor driving device according to a fifth embodiment of the present invention.
Figs. 13 are views illustrating relationships between load torques and oscillations of an air conditioner according to a sixth embodiment of the present invention.
Fig. 14 is a view illustrating a configuration of an oscillation detector according to the sixth embodiment of the present invention.

Reference Numerals

1 single-phase alternating-current power supply, 2 first rectifying means, 3 capacitor, 4 inverter main circuit section, 5 electric motor, 6 reactor, 7 second rectifying means, 8 smoothing capacitor, 9 fan inverter, 10 fan motor, 11 control power supply generation section, 20 inverter control section, 21 electric current detector, 22 output voltage operation section, 23 PWM generation section, 24 coordinate conversion section, 30 virtual current source, 31 parallel circuit, 40 compressor, 41 fan, 50 switching section, 60 insulation section, 70 reactor, 80 oscillation detector, 81 dielectric, 82 electrode

Best Mode for Carrying Out the Invention

First Embodiment

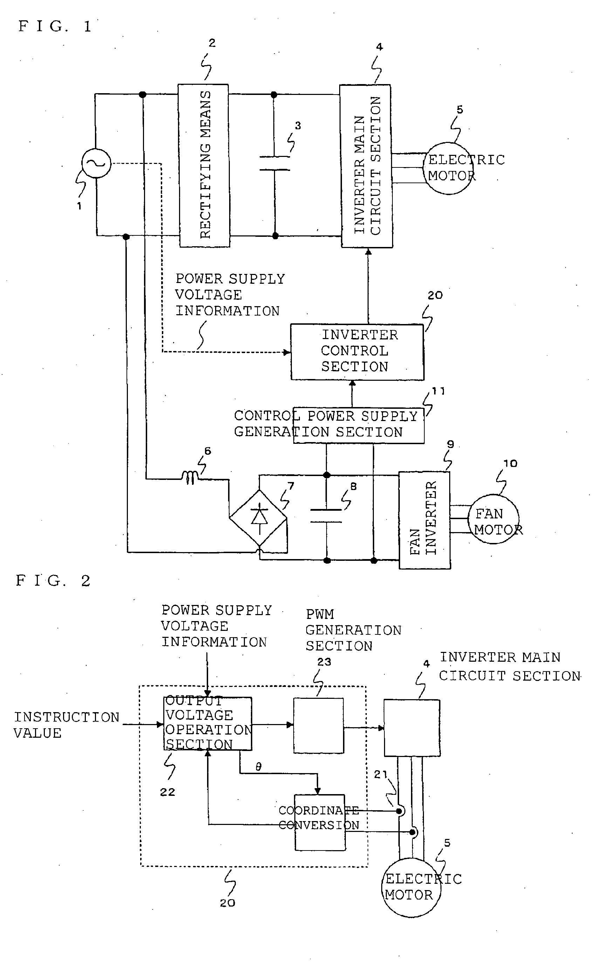

Fig. 1 is a view illustrating a configuration of an electric motor driving device according to a first embodiment of the present invention. Fig. 2 is a control block diagram of an inverter control section according to the first embodiment of the present invention. In the drawings, the electric motor driving device includes a first rectifying means 2 which full-wave rectifies a single-phase alternating-current power supply provided from a single-phase alternating-current power supply 1, a capacitor 3 which is connected to an output side of the first rectifying means 2, and an inverter main circuit section 4 which functions as power conversion means for converting the rectified direct-current voltage into an alternating-current voltage. The output of the inverter main circuit section 4 is connected to an electric motor 5 which is mounted in a compressor, or the like.

Further, the electric motor driving device includes a second rectifying means 7 which is connected in parallel to an input side of the first rectifying means 2, and which full-wave rectifies an alternating-current power supply provided from the single-phase alternating-current power supply 1, a reactor 6 which is connected in series between the single-phase alternating-current power supply 1 and the second rectifying means 7 and functions as harmonics control means for suppressing a harmonic current of a current which flows from the single-phase alternating-current power supply 1, a smoothing capacitor 8 which is connected to an output side of the second rectifying means 2, and a fan inverter 9 which converts the rectified direct-current voltage into an alternating-current voltage and is connected to a fan motor 10 which is mounted in an air conditioner, or the like. The electric motor driving device further includes a control power supply generation section 11 which is connected in parallel with the smoothing capacitor 8 and generates a control power supply, and an inverter control section 20 which receives a power supply from the control power supply generation section 11 and functions as power conversion control means for controlling the inverter main circuit section 4.

The inverter control section 20 includes a current detector 21 which detects a current flowing in the electric motor 5, an output voltage operation section 22 to which an instruction value and power supply voltage information are inputted and which performs an operation of an output voltage to be outputted to the electric motor 5 based on the detected current, a PWM generation section 23 which outputs a PWM signal to the inverter main circuit section 4, and a coordinate conversion section 24 to which a voltage phase is inputted, and which converts the phase current of the electric motor 5 into a current value of a rotational orthogonal coordinate system and outputs the value to the output voltage operation section 22. The configuration of the inverter control section 20 is not limited to the configuration according to the coordinate conversion, other configurations may be employed to control driving of the electric motor 5.

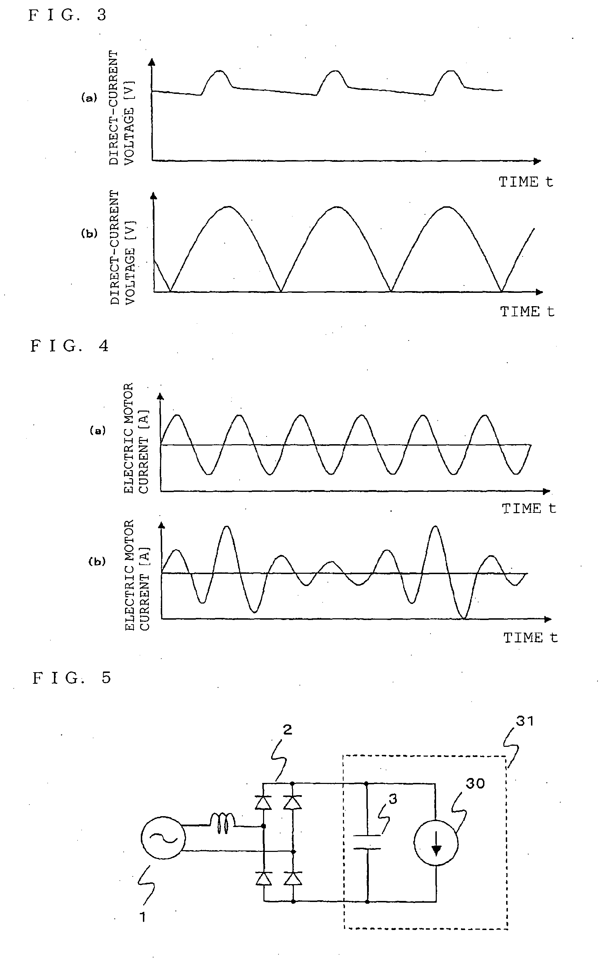

First, a relation between a capacity of a capacitor and a rectified direct-current voltage is described. Generally, a capacitor for smoothing rectified direct-current voltage is provided at an output side of rectifying means to prevent pulsation of the direct-current voltage and reduce oscillation due to torque pulsation. However, when an operation to solve harmonic waves is prioritized, or miniaturization, weight saving, and cost reduction are intended, the capacity of the capacitor is reduced to be small or the capacitor is not provided. According to the capacity of the capacitor, behavior of the direct-current voltage which is an end-to-end voltage of the capacitor is determined. The operation waveforms are shown in Fig. 3.

Figs. 3 are views illustrating relationships between capacities of a smoothing capacitor and rectified voltage waveforms. Fig. 3(a) illustrates a direct-current voltage waveform of a capacity (hereinafter, referred to as a conventional capacity) of a smoothing capacitor used in a conventional electric motor driving device. A variation of a pulsation of the voltage is small and accordingly, an output torque of an electric motor which is controlled by the conventional electric motor driving device can be controlled to be a substantially constant value. On the other hand, Fig. 3(b) illustrates a direct-current voltage waveform in the case where a smoothing capacitor having a capacity significantly reduced as compared with the conventional capacity or no capacitor is provided (hereinafter, referred to as capacity reduction). The direct-current voltage largely pulses due to the capacity reduction, and the waveform becomes a substantially similar form to a full wave rectified waveform of a power supply voltage. Therefore, if the electric motor is controlled similarly to the direct-current voltage shown in Fig. 3 (a), the torque is decreased when the direct-current voltage is largely decreased and the control becomes unstable around a power supply zero cross.

Here, the conventional capacity may be a value of, for example, about 1000 uF to 3000 uF, and the capacity in the capacity reduction may be a value of about 10 uF to 50 uF. If the capacity of the smoothing capacity is C, an inductance of the electric motor is L, a rated current is I, and an allowable pulse quantity (variation) of direct-current voltage is V, the following equation is defined according to the energy conservation law.

[Equation 1]

$$\frac{1}{2}CV^2 = \frac{1}{2}LI^2$$

According to the above equation, an approximate value can be calculated. For example, if the inductance L of the electric motor = 10 mH, and the rated current I = 10A, in a case that the smoothing capacitor is driven by the allowable pulsation voltage = 20V (variation in Fig. 3(a)), the capacity of the smoothing capacitor becomes C = 2500 uF. Then, in a case that the smoothing capacitor is driven by the allowable direct-current voltage = 280V (variation in Fig. 3(b)), the capacity of the smoothing capacitor becomes C = 13 uF. As described above, it is clearly understood from the approximate values that the capacity of the smoothing capacitor can be reduced by increasing the allowable voltage value of the pulsation of the direct-current voltage. It is noted that the conventional capacity and the reduced capacity are varied depending on the capacity of the electric motor and the allowable pulsation voltage, and the values are not limited to the above-described values. Further, it is to be noted that the calculation of the above approximate values is an approximate calculation, and a complete physical phenomenon is not completely represented by the above calculation method since the smoothing capacitor is charged by electric charges supplied from the single-phase alternating-current power supply.

In the first embodiment, the capacity of the capacitor 3 which is provided at the direct-current output side of the first rectifying means is reduced to the capacity smaller than the capacity of the smoothing capacitor 8 which is provided at the output side of the second rectifying means. Then, as described above, the capacity is set such that the waveform of the direct-current voltage becomes substantially similar to the full wave rectified waveform of the power supply voltage. The capacitor 3 is connected to absorb noise generated due to switching of the inverter or a spike voltage. In the embodiment, the case that the capacitor 3 whose capacity is reduced to be small is connected is described. However, the present invention is not limited to the above, and a configuration which is not provided with the capacitor 3 may be employed.

Next, a drive control of the electric motor 5 in the case that the capacity of the capacitor 3 is reduced to be small is described with reference to Figs. 1 to 4. In the drawings, the first rectifying means 2 rectifies the output of the single-phase alternating-current power supply 1 and outputs the rectified power. The inverter main circuit 4 to which the rectified direct-current voltage is inputted is configured to switch the rectified output of the first rectifying means 2, converts the output into an alternating current output of a variable voltage and a variable frequency, and supplies the output to the electric motor 5 based on an operation signal inputted from the inverter control section 20. Here, the capacity of the capacitor 3 is reduced to be small, and then, the direct-current voltage waveform outputted from the first rectifying means 2 to the inverter main circuit section 4 becomes, for example, the pulsation waveform shown in Fig. 3(b). The inverter control section 20 detects the current flowing into the electric motor 5 by a current detector 21, converts the detected current into a current value of a rotational orthogonal coordinate system in the coordinate conversion section 24 and outputs the value to the output voltage operation section 22. The output voltage operation section 22 performs an operation of an output voltage to be outputted to the electric motor 5 based on the inputted current value, and outputs an operation signal to the inverter main circuit section 4 in the PWM generation section 23. Then, to the output voltage operation section 22, power supply voltage information is inputted, and the output voltage operation section 22 calculates an output voltage to control an output torque to be synchronized with the form of the power supply voltage. Thus, the electric motor 5 is driven, and the output torque pulsation becomes the pulsation synchronized with the direct-current voltage of substantially similar form to the full wave rectified waveform of the power supply voltage. Then, the current flowing in the electric motor 5 becomes a pulsating flow which is synchronized with the pulsation of the direct-current voltage shown in Fig. 4(b). In a case of the conventional capacity (the pulsation of the direct-current voltage is the waveform shown in Fig. 3(a)), the current flowing in the electric motor becomes the current waveform which does not have a pulsating flow as shown in Fig. 4(a).

With the above operation, even if the output torque of the electric motor 5 pulsates, by synchronizing the output torque of the electric motor 5 with the power supply voltage, the input current flowing from the single-phase alternating-current power supply 1 to the first rectifying means 2 becomes a substantially sinusoidal waveform, and the harmonics of the input current can be reduced. That is, the inverter main circuit section 4 and the electric motor 5 can be considered as a virtual current source. The virtual current source is described with reference to Fig. 5.

Fig. 5 is a circuit block diagram for explaining the virtual current source according to the first embodiment of the present invention. As shown in Fig. 5, on the premise that the inverter main circuit section 4 and the electric motor 5 are equivalent to a virtual current source 30, when the virtual current source 30 supplies an output current which is synchronized with the direct-current voltage, a parallel circuit 31 of the virtual current source 30 and the capacitor 3 function as resistance, since the capacity of the capacitor 3 is reduced to be small. As a result, the input current becomes a current of similar phase and a similar waveform to the voltage of the single-phase alternating-current power supply 1, and the harmonic current can be reduced.

Then, the inverter control section 20 detects power supply voltage information, for example, phase information of the power supply voltage, a zero point of the power supply voltage, an instantaneous value of the power supply voltage, an instantaneous pulsation voltage of the direct-current voltage, or the like. Then, the inverter control section 20 controls the electric motor 5 such that the current flowing into the inverter main circuit section 4 becomes a similar form to the single-phase alternating-current power supply 1 to achieve both the driving of the electric motor 5 and the harmonic current reduction control of the input current. As described above, when the inverter main circuit section 4 is controlled to be equivalent to the above-described virtual current source 30, even if the output torque pulsation exists, the electric motor 5 can be driven while reducing the harmonic current.

Next, a supply of the direct-current voltage to a device other than the electric motor driven with a source in which the capacity of the smoothing capacitor is reduced to be small is described. In the case of the smoothing capacitor, which has the conventional capacity, used in a conventional electric motor driving device, the rectified direct-current voltage hardly pulsates. Accordingly, a control voltage for a control circuit, or the like, which requires the direct-current voltage, can be generated from the end-to-end voltage of the smoothing capacitor, and the control voltage can be applied to the control circuit, or the like, to supply the control power. However, if the capacity of the smoothing capacitor is reduced to be small, as shown in Fig. 3(b), the direct-current voltage is lowered to about 0V. For example, if a control voltage for the control circuit is generated from the end-to-end voltage of the smoothing capacitor, the voltage for the control circuit pulsates, and the control circuit may be inoperative. Further, if it is applied to an air conditioner, or the like, not only the control circuit but an actuator, an inverter for fan motor, or the like, which uses the direct-current voltage other than the electric motor may be inoperative or a noise oscillation due to the voltage pulsation may be increased.

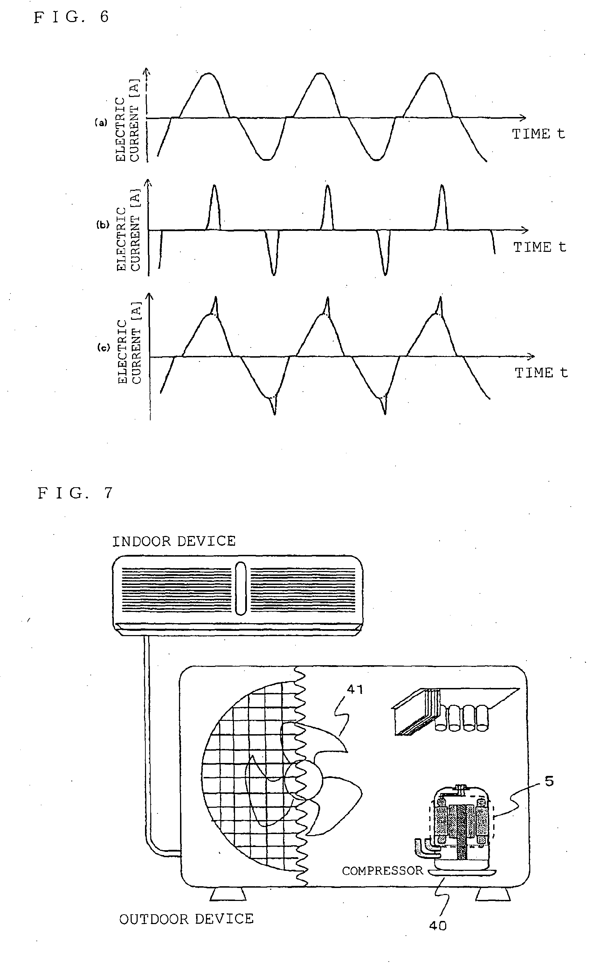

In the conventional electric motor driving devices, when the direct-current voltage to be supplied to such a control circuit, actuator, inverter for fan motor, or the like (hereinafter, referred to as direct current load) is required, in order to generate the control voltage, a smoothing capacitor for the direct current loads is further provided through a diode at an output side of rectifying means, and the direct-current voltage prevented from a voltage pulsation is generated. In such a configuration, the problem of the noise of the fan motor due to the voltage pulsation and the problem of the control voltage for the control circuit can be solved. However, since the rectifying means is used in both purposes, a harmonic current which flows due to the power consumption of the direct-current loads is superposed on the current in the electric motor control. The superposition of the harmonic current components is described with reference to Figs. 6.

Figs. 6 are views illustrating the current waveforms for explaining the superposition of the harmonic current components. As shown in Fig. 6(a), in a case that only the electric motor is used, the inverter control section can control the inverter such that a current like a resistance load flows. However, in the case that the rectifying means is used in the both purposes as described above, by the power consumed by the direct current load, the current flows only at peaks of the power supply voltage. Then, the input current shown in Fig. 6(b) flows.

Accordingly, a current formed by synthesizing the both currents, for example, shown in Fig. 6(c) flows. In a case where a control of the electric motor is performed to prevent a prominence of the current in the vicinity of the current peaks, if the control of the current prominence is further to be performed in addition to the complicated control to perform both the electric motor control and the input current control, very complicated controls are to be performed, and then, the electric motor may not be driven or the harmonic current of the input current may not be reduced.

By providing a reactor at the alternating current side of the rectifying means, the prominences of the peaks of the current shown in Fig. 6(c) can be prevented. However, the reactor and the smoothing capacitor resonate with each other, and the harmonic current increases due to the resonant frequency. Accordingly, if a reactor which has a large capacity is connected, the resonant frequency approximates tenfold of the power supply frequency.

To solve the above-described conventional problems, to prevent the superposition of the harmonic current components, and in order to eliminate the influence of the direct-current voltage pulsation to the direct current loads other than the electric motor 5, with respect to the inverter control in which the capacity of the capacitor 3 is reduced to be small and both the drive control of the electric motor 5 and the input current control are realized, in the present invention, as shown in Fig. 1, the second rectifying means 7 is provided at the input side of the first rectifying means 2 in parallel. Then, by separating the electric power system, the influence of the voltage pulsation to the direct current loads is eliminated. Next, an operation of an air conditioner to which the electric motor driving device according to the present invention is applied is described with reference to Fig. 7.

Fig. 7 is a view illustrating a structure of an air conditioner according to the first embodiment of the present invention. As shown in Fig. 7, the electric motor 5 is disposed in a compressor 40 and drives the compressor 40. In the compressor 40, generally, noise insulation measures are provided as the air conditioner against noise of the electric motor 5 such as a refrigerant gas noise caused at a time of compression of refrigerant. On the other hand, generally, noise insulation measures of a fan 41 which is rotated by the fan motor 10 are such that the fan motor is installed through a rubber foot. Accordingly, the fan motor 10 is designed under conditions with respect to noise heard from the motor, stricter than those for a product design of the electric motor 5. Then, if a direct-current voltage being inputted to the fan inverter 9 which controls a drive of the fan motor 10 pulsates, a torque pulsation synchronizing with the voltage is generated and then, a noise due to the torque pulsation is generated.

Then, as shown in Fig. 1, the fan inverter 9 for driving the fan motor 10 is connected to the both ends of the smoothing capacitor 8 which is separated from the power system for controlling the drive of the electric motor 5. The smoothing capacitor 8 is set to have a sufficient capacity to store electric charge necessary for the fan motor 10. Accordingly, the end-to-end voltage of the smoothing capacitor 8 is stable without pulsation. Therefore, the noise due to the voltage pulsation directly heard from the fan motor 10 can be suppressed to a level equivalent to a state that the capacitor 3 has the conventional capacity. Further, since the direct-current voltage to be inputted to the control power supply generation section 11 which is connected to the both ends of the smoothing capacitor 8 is stabilized, the inverter control section 20 is prevented from becoming an inoperative state.

Power consumption of the direct current load such as the actuator of the air conditioner, for example, the fan motor 10, is much smaller than that of the electric motor 5. For example, the power consumption is about ten percent of the total of the power consumption of the air conditioner. Accordingly, if the rectifying means of the electric motor 5 and the direct current load are separated from each other, the current capacity of the second rectifying means 7 can be realized with the capacity smaller than that of the first rectifying means 2. Further, the reactor 6 which is connected in series between the single-phase alternating-current power supply 1 and the second rectifying means 7, to prevent the harmonic current of the current flowing from the single-phase alternating-current power supply 1 can be realized with very small current capacity. Accordingly, the harmonic current can be reduced and a resonant frequency with the smoothing capacitor 8 can be increased by using the small-capacity reactor, and the reactor of small and lightweight can be used. Further, the capacity of the smoothing capacitor 8 can be realized in a capacity smaller than that of the smoothing capacitor which has the conventional capacity.

Further, the power consumption line of the electric motor 5 can be configured to be separated from the other power consumption line by providing the second rectifying means 7 to independently reduce the both harmonic currents. Second Embodiment

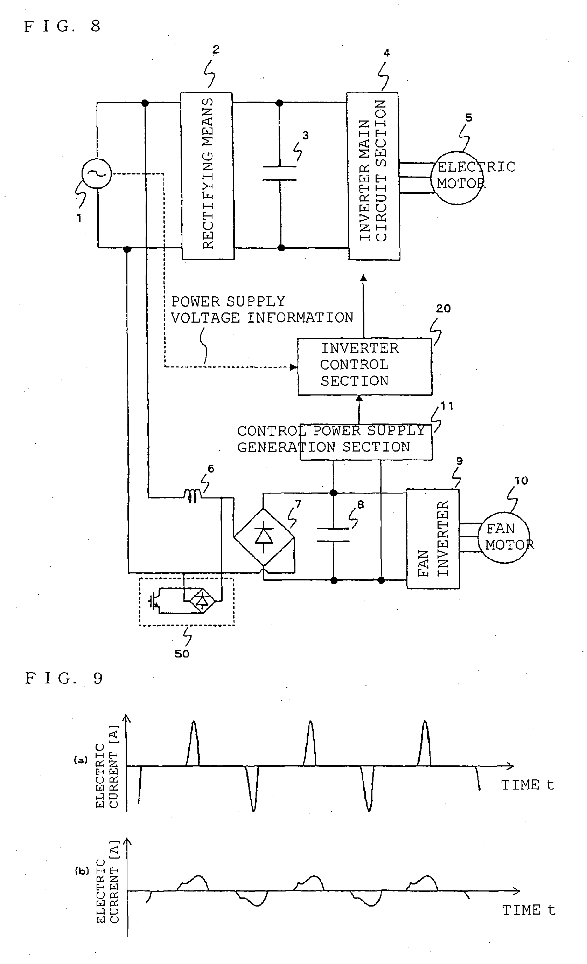

Fig. 8 is a view illustrating a configuration of an electric motor driving device according to a second embodiment of the present invention. Figs. 9 are views illustrating current waveforms for explaining control of harmonic currents according to the second embodiment of the present invention. In the second embodiment, in addition to the configuration according to the first embodiment, as shown in Fig. 8, a switching section 50 which functions as harmonic current control means having a full wave rectifying circuit and a switching element is provided.

As described in the above first embodiment, because the consumed power in the direct current load is small, a current capacity of the switching section 50 can be realized with a small capacity. By providing the switching section 50, a power factor of power supply is largely improved as compared to the case of the insertion of only the reactor 6. Then, current peaks of the harmonic current shown in Fig. 9(a) are suppressed as shown in Fig. 9(b), and the harmonic current due to the power consumed in the direct current load can be reduced.

Accordingly, even if it is superposed on the above-described current waveform from the electric motor 5 shown in Fig. 6(a), the waveform is not largely deformed and it is possible to prevent the harmonic current of the input current from increasing due to the direct current load other than the electric motor 5. That is, if the harmonic current due to the consumed power in the direct current load other than the electric motor 5 is small, the harmonic wave components shown in Fig. 6(c), that is, the prominent current in the vicinity of the peaks is not generated. The switching section 50 is disposed at a position closer to the alternating current side than the second rectifying means 7. However, if the harmonic current can be suppressed, the switching section 50 may be disposed at either the alternating current side or the direct current side.

Third Embodiment

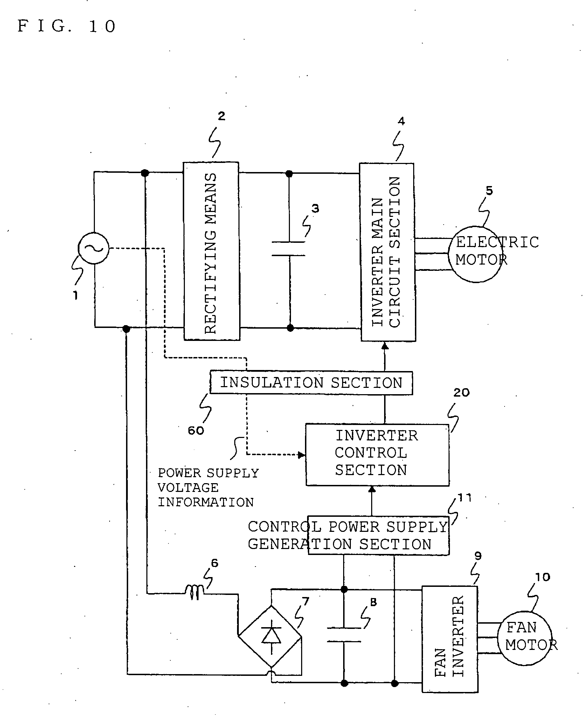

Fig. 10 is a view illustrating a configuration of an electric motor driving device according to a third embodiment of the present invention. In the third embodiment, in addition to the configuration according to the first embodiment, as shown in Fig. 10, an insulation section 60 which insulates the inverter main circuit 4 and the inverter control section 20 is provided.

The inverter control section 20 detects the current of the electric motor 5 and outputs an operation signal to the inverter main circuit section 4. Accordingly, it is necessary to use a reference potential (hereinafter, referred to as GND) common to the inverter main circuit section 4 and the inverter control section 20. Then, an input current harmonics are generated due to wraparound from the GDN. In order to block the wraparound current, the insulation section 60 is inserted to insulate the inverter main circuit section 4 from the inverter control section 20. Then, the input current harmonics due to the wraparound current from the GND can be blocked.

Fourth Embodiment

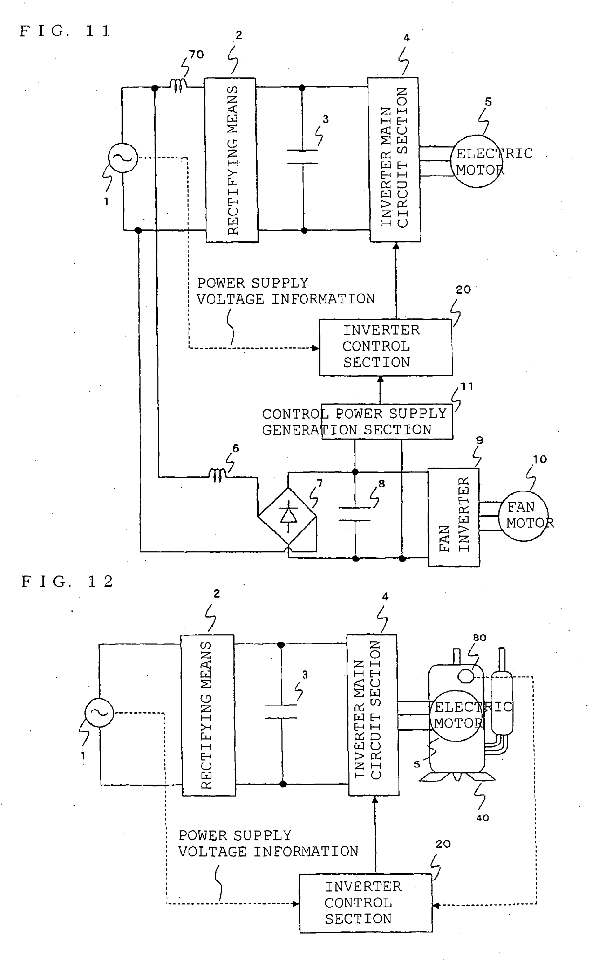

Fig. 11 is a view illustrating a configuration of an electric motor driving device according to a fourth embodiment of the present invention. In the above-described first embodiment to third embodiment, the reactor 6 is connected between the second rectifying means 7 and the single-phase alternating-current power supply 1. In the embodiment, in addition to that, as shown in Fig. 11, a reactor 70 is inserted between the first rectifying means 2 and the single-phase alternating-current power supply 1.

The single-phase alternating-current power supply 1 has small impedance though it is very small. Accordingly, if the reactor 70 is inserted, resonance between the power supply impedance of the single-phase alternating-current power supply 1 and the capacitor 3 can be prevented. Further, if at a polar change of the power supply voltage, that is, just after zero cross, a rush current flows from the power supply, the rush current can be suppressed by the insertion of the reactor 70, and then, a harmonic current due to the rush current can also be prevented.

Preferably, the reactor 70 has a small-capacity inductance value. A resonant frequency f obtained by the following equation with an electrostatic capacity C[F] of the capacitor 3 and an inductance L[H] of the reactor 70 is preferably a value of fortyfold to fiftyfold of a power supply frequency or more.

[Equation 2]

$$f = \frac{1}{2\pi\sqrt{L \cdot C}}$$

Fifth Embodiment

Fig. 12 is a view illustrating a configuration of an electric motor driving device according to a fifth embodiment of the present invention. In addition to the above-described configuration according to the first embodiment, as shown in Fig. 12, an oscillation detector 80 which functions as oscillation detection means is provided on a surface of the compressor 40 which is driven by the electric motor 5. The oscillation detector 80 detects information about at least either of an oscillation amplitude and an oscillation frequency of the compressor 40 and inputs the detected information into the inverter control section 20. Functions having similar advantages to the above-described advantages are omitted in the drawings.

As described above, due to the direct-current voltage pulsation, the output torque of the electric motor 5 pulsates and the oscillation is generated. Then, noise is expected to be generated. Then, if a rotational frequency of the electric motor 5 corresponds to the oscillation frequency of the compressor 40, a mechanical resonance may be generated. Especially, a load torque due to a refrigerant compression of the compressor 40 also pulsates, the pulsation of the load torque and the pulsation of the output torque of the electric motor 5 cause a hunting, and a very large oscillation is generated correlatively with the mechanical resonance. However it is difficult to prevent the oscillation to a level at which commercialization of the product can be realized in consideration of the oscillation due to the hunting of the mechanical resonance, the load torque, and the output torque.

Accordingly, in the embodiment, the inverter control section 20 controls the rotational frequency of the electric motor 5 such that the rotational frequency of the electric motor 5 does not correspond to the oscillation frequency of the compressor 40 inputted from the oscillation detector 80. With the control of the electric motor 5, the correspondence of the frequency with the mechanical resonant frequency can be prevented; and the mechanical resonance can be suppressed.

Sixth Embodiment

A configuration according to this embodiment is similar to that of the above embodiment 5. In the embodiment, the inverter control section 20 controls the output torque of the electric motor 5 based on the oscillation amplitude and the oscillation frequency detected by the oscillation detector 80.

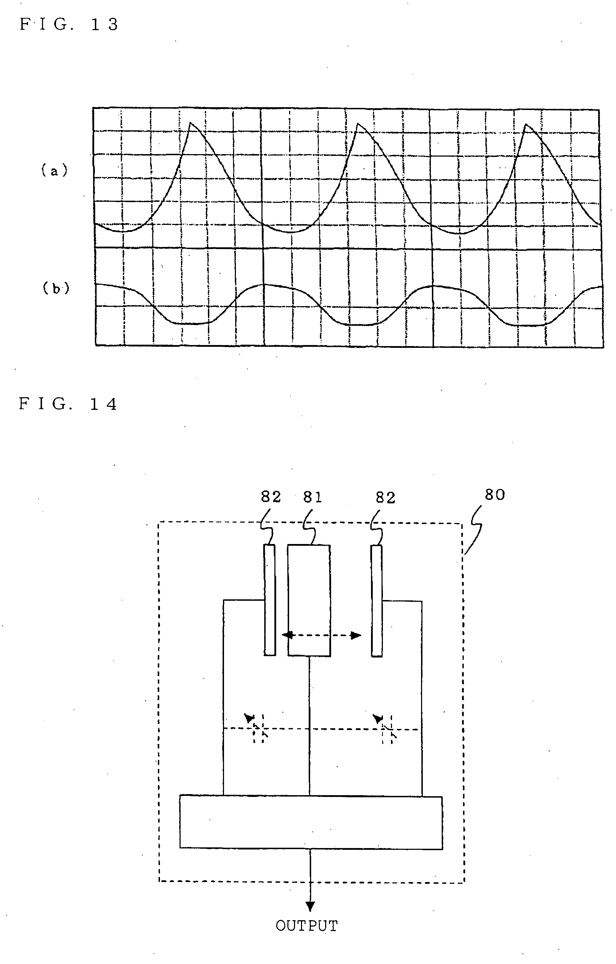

Here, the oscillation generated from the compressor 40 is described. The oscillation generated from the compressor 40 can be calculated using a transfer function of a mechanical system. The source of the oscillation is the electric motor 5. Then, if an output torque to be outputted by the electric motor 5 is Tm, and the load torque due to the compression structure machine of the compressor connected to the electric motor 5 is T1, the oscillation is not generated in a case of Tm - T1 = 0. That is, the oscillation is generated in proportion to the difference of (Tm - T1). Accordingly, if the output torque is controlled in the inverter control section 20 such that the difference between the output torque Tm and the load torque T1 becomes zero, the oscillation can be prevented. The waveform shown in Fig. 13(a) is the load torque of the compressor 40. With respect to the load torque of Fig. 13(a), the difference (Tm - T1) with respect to the output torque Tm is shown in Fig. 13(b). An oscillation which has a similar waveform to the waveform of the Fig. 13(b) is generated and outputted by the oscillation detector 80. Accordingly, if a component of a reversed phase shown in Fig. 13(b) is superposed on the output torque Tm, then, it becomes Tm - T1 = 0. Then, the oscillation can be prevented.

The inverter control section 20 controls the output of the inverter main circuit section 4 such that the phase of the oscillation waveform of the compressor 40 obtained based on the information about at least either of inputted oscillation amplitude and the oscillation frequency and the phase of the pulsation waveform of the output torque of the electric motor 5 become reversed phases with each other. With the operation, the pulsation torque generated by reducing the capacity of the smoothing capacitor 3 to be small can be used for the oscillation prevention, and the pulsation torque can be effectively used.

The oscillation detector 80 may be formed using an IC chip to integrate a battery and a radio IC to eliminate the wiring. The configuration has similar advantages. The IC chip may form the oscillation detector 80, for example, as shown in Fig. 14, using a semiconductor which detects capacitance variation with a mobile dielectric 81 and fixed electrodes 82. Then, the oscillation detector can be inexpensively formed as compared to conventional oscillation detectors.

In the above description, the oscillation frequency is detected using the oscillation detector 80. However, it is not limited to the above, and if a noise detector is used to detect the oscillation frequency, similar operation can be performed and similar advantages to the above-described advantages can be obtained. Further, in the above description, it is configured that the oscillation detector 80 detects the oscillation. However, if it is configured that the oscillation detector 80 estimates the oscillation, also similar advantages can be obtained. For example, since the voltage to be applied to the electric motor 5 and the current flowing in the electric motor 5 are known, the inverter control section 20 can estimates the output torque Tm. Further, since the motor speed control is performed, the speed is known. If the estimated output torque and the known speed are used, the load torque T1 can also be estimated. Accordingly, it is possible to control such that Tm - T1 becomes zero. Then, if the Tm - T1 which has a correlation with the oscillation is controlled, a similar advantage to the oscillation control can be created. With the above-described configuration, while the degree of control of the oscillation becomes smaller than the casa of using the oscillation detector 80, the pulsation torque generated by reducing the capacity to be small can be used for the oscillation control with inexpensive configuration as compared to the configuration in which the oscillation detector 80 is used.

Industrial Applicability

In addition to the air conditioner, the present invention can be applied to a product which has, as a form of the product, a compressor and a function, which consumes electric power, other than the compressor, for example, a dehumidifier, a refrigerator, a washing and drying machine, or the like. Further, the present invention can be applied, a product which has no compressor but an electric motor which consumes most of the electric power of the product and a function, which consumes electric power, other than the electric motor, for example, a cleaner, a washing and drying machine, or the like. Further, the similar advantages can be obtained in a product in which noise measurements against an electric motor which mainly consumes the electric power are sufficiently taken and an actuator which consumes a power from the direct-current voltage is mounted.

**Claims**

1. An electric motor driving device comprising:

   first rectifying means to which an alternating-current power supply is input, and which rectifies the alternating-current voltage to a direct-current voltage;
   power conversion means which converts the direct-current voltage rectified by the first rectifying means into an alternating-current voltage and supplies the voltage to an electric motor;
   second rectifying means to which the alternating-current power supply is input, and which rectifies the alternating-current voltage into a direct-current voltage; and
   a smoothing capacitor which is provided at a direct current output side of the second rectifying means and which smoothes the rectified direct-current voltage and supplies the voltage to a direct current load.

2. The electric motor driving device according to claim 1, further comprising a capacitor between the first rectifying means and the power conversion means.

3. The electric motor driving device according to claim 1 or claim 2, wherein a capacity of the capacitor which is provided at the direct current output side of the first rectifying means is larger than that of the smoothing capacitor which is provided at the output side of the second rectifying means.

4. The electric motor driving device according to any one of claims 1 to 3, further comprising power conversion control means to which the direct-current voltage rectified by the smoothing capacitor provided at the output side of the second rectifying means is supplied, and which controls the power conversion means.

5. The electric motor driving device according to any one of claims 1 to 4, wherein a consumed electric power of the direct current load to which the direct-current voltage smoothed by the smoothing capacitor provided at the output side of the second rectifying means is smaller than a consumed electric power of the electric motor to which the alternating-current voltage is supplied by the power conversion means.

6. The electric motor driving device according to any one of claims 1 to 5, further comprising harmonic current prevention means which prevents a harmonic current generated by the power consumption of the direct current load to which the direct-current voltage smoothed by the smoothing capacitor provided at the output side of the second rectifying means is supplied.

7. A compressor driving device comprising:

   the electric motor driving device according to any one of claims 1 to 6;
   an electric motor which is controlled by the electric motor driving device; and
   a compressor which is driven by the electric motor.

8. The compressor driving device according to claim 7, further comprising:

   oscillation detection means which detects an oscillation frequency of the compressor,
   wherein to the power conversion control means, the information of the oscillation frequency detected by the oscillation detection means is inputted and the power conversion control means controls a rotational frequency of the electric motor such that the rotational frequency of the electric motor does not correspond with the oscillation frequency.

9. The compressor driving device according to claim 7, further comprising:

   oscillation detection means which detects at least either of an oscillation amplitude and an oscillation frequency of the compressor,
   wherein to the power conversion control means, the information of at least either of the oscillation amplitude and the oscillation frequency detected by the oscillation detection means is inputted, and based on the inputted information of at least either of the oscillation amplitude and the oscillation frequency of the compressor, the power conversion control means controls an output torque of the electric motor to prevent the oscillation of the compressor.

F I G. 1

F I G. 2

FIG. 3

(a)

DIRECT-CURRENT VOLTAGE [V]

TIME t

(b)

DIRECT-CURRENT VOLTAGE [V]

TIME t

FIG. 4

(a)

ELECTRIC MOTOR CURRENT [A]

TIME t

(b)

ELECTRIC MOTOR CURRENT [A]

TIME t

FIG. 5

F I G. 6

(a) ELECTRIC CURRENT [A] → TIME t

(b) ELECTRIC CURRENT [A] → TIME t

(c) ELECTRIC CURRENT [A] → TIME t

F I G. 7

INDOOR DEVICE

41

5

COMPRESSOR

OUTDOOR DEVICE

40

FIG. 8

FIG. 9

F I G. 1 0

FIG. 11

POWER SUPPLY
VOLTAGE INFORMATION

RECTIFYING MEANS

INVERTER MAIN
CIRCUIT SECTION

ELECTRIC
MOTOR

INVERTER
CONTROL
SECTION

CONTROL POWER SUPPLY
GENERATION SECTION

FAN
INVERTER

FAN
MOTOR

FIG. 12

RECTIFYING MEANS

INVERTER MAIN
CIRCUIT SECTION

ELECTRIC
MOTOR

POWER SUPPLY
VOLTAGE INFORMATION

INVERTER
CONTROL
SECTION

FIG. 13

(a)

(b)

FIG. 14

82  81  82  80

OUTPUT

<div align="center">

**INTERNATIONAL SEARCH REPORT**

</div>

| | International application No. |
|---|---|
| | PCT/JP2006/324709 |

**A. CLASSIFICATION OF SUBJECT MATTER**
*H02P27/06*(2006.01)i

According to International Patent Classification (IPC) or to both national classification and IPC

**B. FIELDS SEARCHED**

Minimum documentation searched (classification system followed by classification symbols)
H02P27/06

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2005-73345 A (Toshiba Corp.),<br>17 March, 2005 (17.03.05),<br>Par. Nos. [0042] to [0051]; Fig. 5<br>(Family: none) | 1,2<br>3,6-9 |
| X<br>Y | JP 2000-188897 A (Sanyo Denki Kabushiki Kaisha),<br>04 July, 2000 (04.07.00),<br>Par. Nos. [0021] to [0037]; Figs. 1 to 3<br>(Family: none) | 1,2,4,5<br>6-9 |
| Y | JP 2003-164179 A (Matsushita Electric<br>Industrial Co., Ltd.),<br>06 June, 2003 (06.06.03),<br>Par. Nos. [0003] to [0005], [0019] to [0041];<br>Figs. 1 to 7<br>(Family: none) | 3 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>14 March, 2007 (14.03.07) | Date of mailing of the international search report<br>20 March, 2007 (20.03.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/324709 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-145358 A  (Sanyo Electric Co., Ltd.), 25 May, 2001 (25.05.01), Par. Nos. [0052] to [0095]; Figs. 1 to 10 (Family: none) | 6 |
| Y | JP 6-273029 A  (Sharp Corp.), 30 September, 1994 (30.09.94), Claim 4; Par. Nos. [0017] to [0037]; Figs. 1 to 5 (Family: none) | 7-9 |
| Y | JP 2000-125410 A  (Mitsubishi Electric Corp.), 28 April, 2000 (28.04.00), Par. Nos. [0024] to [0042]; Figs. 1, 2 (Family: none) | 9 |
| A | JP 2004-248395 A  (Matsushita Electric Industrial Co., Ltd.), 02 September, 2004 (02.09.04), Par. Nos. [0021] to [0023]; Fig. 6 (Family: none) | 3 |

Form PCT/ISA/210 (continuation of second sheet) (April 2005)

**EP 1 871 003 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10150795 A
- JP 2002051589 A
- JP 6153534 A
- JP 2005253282 A